(19) Europäisches Patentamt
European Patent Office
Office européen des brevets

(11) **EP 1 467 263 A1**

(12) **EUROPEAN PATENT APPLICATION**
published in accordance with Art. 158(3) EPC

(43) Date of publication:
**13.10.2004 Bulletin 2004/42**

(51) Int Cl.⁷: **G03H 1/22**

(21) Application number: **03701727.4**

(86) International application number:
**PCT/JP2003/000246**

(22) Date of filing: **15.01.2003**

(87) International publication number:
**WO 2003/060612 (24.07.2003 Gazette 2003/30)**

(84) Designated Contracting States:
**AT BE BG CH CY CZ DE DK EE ES FI FR GB GR HU IE IT LI LU MC NL PT SE SI SK TR**

(30) Priority: **16.01.2002 JP 2002006881**
**16.05.2002 JP 2002140961**
**12.06.2002 JP 2002171864**

(71) Applicant: **Japan Science and Technology Agency**
**Kawaguchi-shi, Saitama 332-0012 (JP)**

(72) Inventor: **ITO, Tomoyoshi**
**Chiba-shi, Chiba 263-0054 (JP)**

(74) Representative: **Hoarton, Lloyd Douglas Charles**
**Forrester & Boehmert,**
**Pettenkoferstrasse 20-22**
**80336 München (DE)**

(54) **MOVING IMAGE HOLOGRAPHY REPRODUCING DEVICE AND COLOR MOVING IMAGE HOLOGRAPHY REPRODUCING DEVICE**

(57) A moving-image holographic reproducing device that includes a reflective liquid crystal display and further a light-emitting diode functioning as a light source and that is capable of reproducing a high-resolution image in a simple way is provided. Also, a color moving-image holographic reproducing device that is capable of reproducing a color holographic image by a significantly simplified structure using a single plate hologram without the need for time-multiplexing is provided.

The moving-image holographic reproducing device includes a computer for creating a hologram from three-dimensional coordinate data, a reflective liquid crystal display for displaying the hologram, a half mirror for projecting the displayed hologram, and a light-emitting diode, wherein a reconstructed three-dimensional image is displayed by illuminating the half mirror with light emitted from the light-emitting diode.

Manipulating a sufficiently large size three-dimensional holographic image in real time requires computational power one thousand to ten thousand times higher than that of current supercomputers. According to the present invention, such an amount of information can be processed at high speed by dedicated hardware in a highly parallel and distributed manner.

FIG. 3

## EP 1 467 263 A1

**Description**

Technical Field

The present invention generally relates to a moving-image holographic reproducing device and a color moving-image holographic reproducing device. More particularly, the present invention relates to a moving-image holographic reproducing device including a reflective liquid crystal display and light-emitting diodes and to a moving-image holographic reproducing device including dedicated high-speed parallel processing hardware for holographic computation and a reflective liquid crystal display, and also to a color moving-image holographic reproducing device using three primary-color reference light sources and a single-plate hologram.

Background Art

[A] The following references disclose known moving-image holographic reproducing devices.

(1) Tomoyoshi Shimobaba and Tomoyoshi Ito, "The Fast Computational Method Suitable for Hardware of Computer Generated Hologram with Phase Computation by Addition with Fixed-Point Format", Journal of The Institute of Electronics, Information and Communication Engineers, Vol. J84-D-II, No. 3, pp. 603-60.7 (2001)
(2) Tomoyoshi Shimobaba and Tomoyoshi Ito, "An efficient computational method suitable for hardware of computer-generated hologram with phase computation by addition", Computer Physics Communications, vol. 138, pp. 44-52 (2001)
(3) Tomoyoshi Ito, Takashi Yabe, Masashi Okazaki, and Masanori Yanagi, "Special-Purpose Computer HORN-1 for Reconstruction of Virtual Image in Three Dimensions", Computer Physics Communications, vol. 82, pp. 104-110 (1994)
(4) Tomoyoshi Ito, Hesham Eldeib, Kenji Yoshida, Shinya Takahashi, Takashi Yabe, and Tomoaki Kunugi, "Special-Purpose Computer for Holography HORN-2", Computer Physics Communications, vol. 93, pp. 13-20 (1996)
(5) Tomoyoshi Shimobaba, Nobuyuki Masuda, Takashige Sugie, Satoru Hosono, Shinobu Tsukui, and Tomoyoshi Ito, "Special-Purpose Computer for holography HORN-3 with PLD technology", Computer Physics Communications, vol. 130, pp. 75-82 (2000)
(6) Susumu Iwase and Hiroshi Yoshikawa, "Fresnel Hologram Fast Computation Method Employing Difference Method", Journal of the Institute of Image Information and Television Engineers, Vol. 52, No. 6, pp. 899-901 (1998)
(7) K. Matsushima and M. Takai, "Recurrence formulas for fast creation of synthetic three-dimensional holograms", Appl. Opt., Vol. 39-35, pp. 6587-6593 (2000).

In holography, wavefronts of an object beam are overlapped by a reference beam of light in phase and are then recorded on a hologram as interference fringes. To reproduce an image, the wavefronts of the object beam are faithfully reconstructed by illuminating the hologram with the reference beam of light. The hologram can be created by a computer. This hologram is referred to as "a computer generated hologram (CGH)". Therefore, theoretically, if data resulting from a numerical simulation is converted into a hologram by computation and is holographically reconstructed, a three-dimensional image can be visualized. Furthermore, by consecutively updating the data, a moving three-dimensional image can be observed.
This process requires a device capable of successively updating the hologram data. Unfortunately, known devices cannot record interference fringes of a hologram sufficiently and, therefore, satisfactory moving images cannot be provided.
The idea of displaying a moving holographic image was first researched at the Massachusetts Institute of Technology (MIT) in 1989. The research group of MIT used an acousto-optical modulator (AOM) as a display device. A reconstructed image was enlarged by a mechanical and optical setup including a polygon mirror. In 1995, an image having a size of about 10 cm was successfully reconstructed. This system exhibited a sophisticated and outstanding idea in that a three-dimensional image was electronically produced in a technology environment at the time.

[B] Additionally, the following references disclose known color moving-image holographic reproducing devices and, in particular, known color moving-image holographic reproducing devices that use three-primary color reference light sources and a single-plate hologram.

(8) Koki Sato, "Animated Color 3D Image Display using Kinoforms by Liquid Crystal Devices", Journal of The Institute of Television Engineers of Japan, Vol. 48, No. 10, pp. 1261-1266 (1994)

(9) "A Method of Color Holographic-Display with Reflective LCD", Journal of Information-System Society Conference 2001, The Institute of Electronics, Information and Communication Engineers, pp. 150 (2001)

As shown.in the above-described references, to achieve color moving-image holography, the following two methods have been proposed.

(1) three-panel color holography (refer to Reference (8))

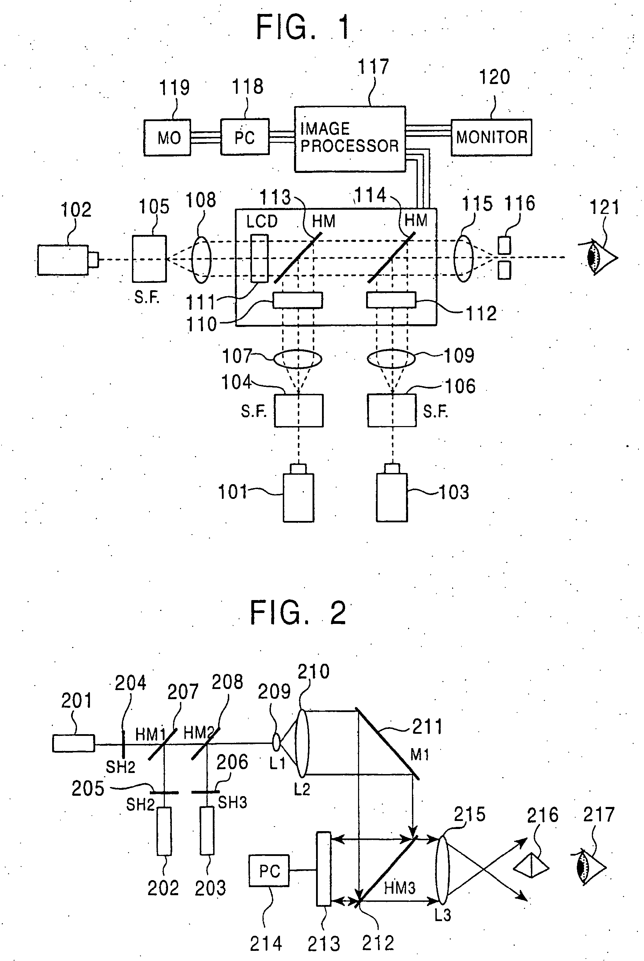

Fig. 1 is a block diagram of such a known color moving-image holographic reproducing device. In this drawing, reference numeral 101 denotes a He-Ne laser functioning as a red light source, reference numeral 102 denotes a YAG laser functioning as a green light source, and reference numeral 103 denotes a He-Cd laser functioning as a blue light source. Reference numerals 104, 105, and 106 denote spatial filters (SFs). Reference numerals 107, 108, 109, and 115 denote lenses. Reference numerals 110, 111, and 112 denote transmissive LCDs. Reference numerals 113 and 114 denote half mirrors (HMs). Reference numeral 116 denotes a slit. Reference numeral 117 denotes an image processor. Reference numeral 118 denotes a computer (PC: personal computer). Reference numeral 119 denotes a magneto-optical drive (MO). Reference numeral 120 denotes a monitor. Reference numeral 121 denotes an observer.

As shown in Fig. 1, three lasers 101, 102, and 103 are a red light source (He-Ne laser), a green light source (YAG laser), and a blue light source (He-Cd laser), respectively. Waveforms of the laser beams are reshaped by the spatial filters (SFs) 104, 105, and 106 and are then projected onto the LCDs 110, 111, and 112, respectively.

Holograms for red, green, and blue are displayed on the three LCDs 110, 111, and 112, respectively. The reproduced beams of light from the holograms are combined by the half mirrors (HMs) 113 and 114 to form a color holographic image. The holograms displayed on the LCDs 110, 111, and 112 are created by the personal computer 118 and then delivered to the LCDs via the image processor 117.

As described above, in the known devices, three holograms are prepared for three, that is, R (red), G (green), and B (blue), color light sources and the reproduced beams of light are combined to form a color holographic image.

(2) Single-plate time-multiplexing color holography (refer to Reference (9))

Fig. 2 is a block diagram of another known color moving-image holographic reproducing device.

In this drawing, reference numeral 201 denotes a laser functioning as a red light source, reference numeral 202 denotes a laser functioning as a green light source, and reference numeral 203 denotes a laser functioning as a blue light source. Reference numerals 204, 205, and 206 denote electronic shutters (SH1, SH2, and SH3), respectively. Reference numerals 207, 208, and 212 denote half mirrors (HM1, HM2, and HM3), respectively. Reference numerals 209, 210, and 215 denote lenses (L1, L2, and L3), respectively. Reference numeral 211 denotes a mirror (M1). Reference numeral 213 denotes a reflective LCD. Reference numeral 214 denotes a computer (PC: personal computer). Reference numeral 216 denotes a reconstructed image. Reference numeral 217 denotes an observer.

Beams from the three lasers (red laser, green laser, and blue laser) 201, 202, and 203 are combined into one beam by the half mirrors (HM1 and HM2) 207 and 208. At that time, since each beam is turned on and off in rapid succession by the corresponding electronic shutter (SH1, SH2, or SH3) 204, 205, or 206, the combined beam is projected in a time-multiplexing sequence of red, green, and blue.

This beam is projected onto the reflective LCD 213 after passing through the lenses (L1 and L2) 209 and 210, the mirror (M1) 211, and the half mirror (HM3) 212. The computer (PC) 214 sequentially generates holograms for red, green, and blue components in synchronization with the electronic shutter 204, 205, and 206, and then displays them on the reflective LCD 213.

Thus, in the known devices, R (red), G (green), and B (blue) components of the image are sequentially displayed on a single hologram by using time-multiplexing while light beams from R, G, and B light sources are synchronously projected onto the hologram. A color image is reconstructed by displaying the color components at a high enough time-multiplexing rate for human visual perception.

Disclosure of Invention

Unfortunately,

[A] The system using the AOM in a moving-image holographic reproducing device has the following two drawbacks.

(1) First, since the system eliminates vertical parallax, a complete three-dimensional image, which is the characteristic of holography, cannot be reconstructed. This is not a problem for entertainment use because human perception of three-dimensions is more sensitive in the horizontal direction than in the vertical direction; however, this becomes a disadvantage in visualization of a numerical simulation, where the entire visualized structure is critical.

(2) Second, since the system uses a mechanical control unit, such as a polygon mirror, the entire system becomes complicated. Compared to electronic control, mechanical control is inferior in terms of speed, physical dimensions, and reliability. This is a big drawback for practical applications in the future.

In contrast, a liquid crystal display (LCD) is commonly used as an electronically controlled display device. Systems that use LCDs do not have the above-described drawbacks. The systems are capable of 1) reconstructing a complete three-dimensional image and 2) being completely electronically controlled. In addition, the LCD can be used simply by being connected to a computer. Accordingly, the LCD.provides easy handling and, therefore, the LCD is a suitable device for CGH.

Moving-image holographic reproducing devices using LCDs were carried out by Citizen Watch Co., Ltd. and Telecommunications Advancement Organization of Japan and so on in the early 1990's, and moving images were successfully displayed. At that time, a high-resolution transmissive LCD, which was developed for a projector and had a pixel pitch of 30 to 50 μm, was used as a display device. However, to reconstruct a holographic image, this pitch was insufficient and, therefore, a reconstructed image was too small for the naked eye to view. This result suggested that an LCD could not be used as a display device for reconstruction of a holographic image.

Recently, LCDs having a higher resolution, about 10 μm pixel pitch, have been developed. These high-resolution LCDs are reflective LCDs used for recent practical applications instead of known transmissive LCDs.

Compared to transmissive LCDs, reflective LCDs have two main advantages for reconstruction of a holographic image.

First, a reflective LCD structurally facilitates high pixel resolution. Since a reflective LCD has a control circuit on its back surface, liquid crystal elements can be closely arranged on a front surface of the reflective LCD.

Additionally, the structural advantage provides another advantage for the usability of light. That is, in a transmissive LCD, since a control circuit must be mounted on the same plane as liquid crystal elements, achieving a high aperture ratio is difficult. Consequently, the transmittance ratio is about 30% and, therefore, the reconstructed image is dark. In contrast, a reflective LCD can increase the reflectance ratio (theoretically greater than 90% is possible) and, therefore, a bright reconstructed image can be easily achieved. This is a second advantage.

Accordingly, the inventor of the present invention recognized that a reflective LCD was the most suitable display for a practical holographic reproducing device and experimented on holographic reproduction with a reflective LCD.

The experiment of the system was first conducted using a laser, which had been used for moving-image holography, as a light source for reproducing the image. The experimental result was disclosed in a short paper in the Journal of the Institute of Image Information and Television Engineers in May, 2000.

[B] Additionally, in known color moving-image holographic reproducing devices, three holograms are required. In the known color moving-image holographic reproducing device using the above-described technology [B]-(2), a synchronized shutter system is required.

Thus, the structures of the known color moving-image holographic reproducing devices are complicated and, therefore, the cost is disadvantageously increased.

Accordingly, it is an object of the present invention to provide a simple color moving-image holographic reproducing device that can reconstruct a high-resolution image by using a reflective liquid crystal display and further using a light-emitting diode as a reproducing light source.

It is another object of the present invention to provide a significantly simplified color moving-image holographic reproducing device that can achieve color holography by using a single-plate hologram without the need for time-multiplexing.

According to the present invention,

[1] A moving-image holographic reproducing device includes a computer for creating a hologram from three-dimensional coordinate data, a reflective liquid crystal display for displaying the hologram, a half mirror for projecting the displayed hologram, and a light-emitting diode, wherein a reconstructed three-dimensional image is displayed by illuminating the half mirror with light emitted from the light-emitting diode.

[2] In the moving-image holographic reproducing device described in [1], three of the light-emitting diodes emit three primary colors of light, red (R), green (G), and blue (B) light, the RGB light sources produce images of the corresponding colors, and a color image is reconstructed by combining the images of the corresponding colors.

[3] The moving-image holographic reproducing device described in [1] or [2] further includes a collimator lens disposed between the light-emitting diode and the half mirror.

[4] The moving-image holographic reproducing device described in [1] or [2] further comprising a field lens disposed between the half mirror and an observer.

[5] The moving-image holographic reproducing device described in [1] further includes a dedicated high-speed parallel distributed processing system including a plurality of dedicated LSIs between the computer and the reflective liquid crystal display.

[6] In the moving-image holographic reproducing device described in [5], the dedicated high-speed parallel distributed processing system further includes a shared memory for storing coordinates of an object and the plurality of dedicated LSIs configured in parallel.

[7] A color moving-image holographic reproducing device includes a computer for creating a single-plate hologram from three-dimensional coordinate data, a reflective liquid crystal display for displaying the single-plate hologram, a half mirror for projecting the displayed single-plate hologram, and three LEDs for functioning as reference light sources, the LEDs respectively emitting primary colors of light, red (R), green (G), and blue (B), at the same time, wherein optical axes of color light beams from the LEDs are shifted from each other, the light beams are projected to the half mirror, and a color holographic image is reconstructed with the single-plate hologram.

[8] In the color moving-image holographic reproducing device described in [7], the R, G, and B LEDs are arranged in proximity to each other.

[9] In the color moving-image holographic reproducing device described in [8], a first LED of the R, G, and B LEDs is disposed in the vicinity of a second LED in the X direction and a third LED is disposed in the vicinity of the second LED in the Y direction.

[10] In the color moving-image holographic reproducing device described in [9], each of the R, G, and B LEDs has a pinhole filter and emits light to a collimator lens to generate parallel light, and the half mirror is illuminated with the parallel light.

[11] In the color moving-image holographic reproducing device described in [10], the size of a color reconstruction area is determined in accordance with the mutual ratios of a distance $d_1$ between the LEDs, a distance $d_2$ between the pinhole filter and the collimator lens, and a distance $d_3$ between the reflective liquid crystal display and a field lens that produces a reconstructed image.

Brief Description of the Drawings

Fig. 1 is a block diagram of a known color moving-image holographic reproducing device including three hologram plates.

Fig. 2 is a block diagram of a known color moving-image holographic reproducing device including a single-plate hologram and a time-multiplexed reference light source.

Fig. 3 is a block diagram of a moving-image holographic reproducing device including a reflective liquid crystal display and a light-emitting diode according to a first embodiment of the present invention.

Fig. 4 is an example of a reconstructed cube with the moving-image holographic reproducing device according to the first embodiment of the present invention.

Fig. 5 is an example of reconstruction using LEDs for three primary colors of light, red (R), green (G), and blue (B), in the moving-image holographic reproducing device according to the first embodiment of the present invention.

Fig. 6 is a system block diagram of a moving-image holographic reproducing device according to a second embodiment of the present invention.

Fig. 7 is a schematic diagram of a hologram display area of the moving-image holographic reproducing device according to the second embodiment of the present invention.

Fig. 8 is a block diagram of a parallel distributed system including dedicated chips in the moving-image holographic reproducing device according to the second embodiment of the present invention.

Fig. 9 is an external view of a dedicated computer system of the moving-image holographic reproducing device according to the second embodiment of the present invention.

Fig. 10 is an example of a reconstructed dice by the moving-image holographic reproducing device according to the second embodiment of the present invention.

Fig. 11 is a block diagram of a color moving-image holographic reproducing device according to an embodiment of the present invention.

Fig. 12 shows positions of reference light sources and positions of LCD-reflected direct beams of light at a reconstruction position according to the embodiment of the present invention.

Fig. 13 shows drawing areas for red (R), green (G), and blue (B) components according to the embodiment of the present invention.

Fig. 14 shows a color cube to be reconstructed according to the embodiment of the present invention.

Fig. 15 shows the cube divided and drawn in respective color component regions and a reconstructed example of the cube with a plain color according to the embodiment of the present invention.

Fig. 16 shows a reconstructed holographic example of the color cube according to the embodiment of the present invention.

Fig. 17 shows a reconstructed example of color holography in an experiment according to the present invention.

Best Mode for Carrying Out the Invention

Embodiments of the present invention will now be described with reference to the accompanying drawings.

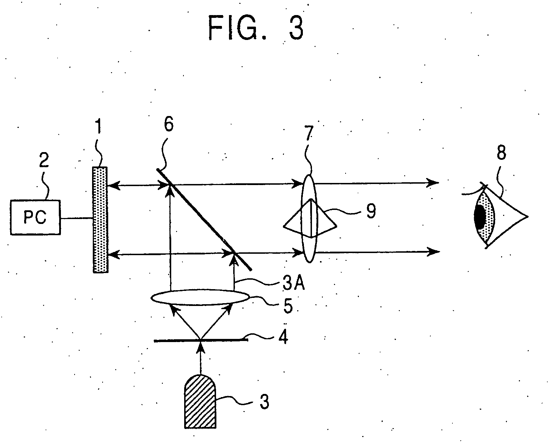

Fig. 3 is a block diagram of a moving-image holographic reproducing device including a reflective liquid crystal display and a light-emitting diode according to a first embodiment of the present invention.

In the drawing, reference numeral 1 denotes a reflective liquid crystal display (reflective LCD). Reference numeral 2 denotes a personal computer (PC). Reference numeral 3 denotes a light-emitting diode (LED). Reference numeral 3A denotes LED light. Reference numeral 4 denotes a pinhole filter. Reference numeral 5 denotes a collimator lens. Reference numeral 6 denotes a beam splitter (half mirror). Reference numeral 7 denotes a field lens. Reference numeral 8 denotes an observer. Reference numeral 9 denotes a reconstructed image.

As can be seen, this moving-image holographic reproducing device is very simple. In this device, the reflective LCD 1 is, for example, the CMD8x6D available from Colorado MicroDisplay Inc.. The CMD8×6D includes a small panel having a pixel pitch of 12 μm, 480 thousand (800 by 600) total number of pixels, and an absolute size of 9.6 mm by 7.2 mm. The LED 3 is, for example, one from the NSP series available from NICHIA Corporation.

Wavefronts from the LED 3 are reshaped into plane waves by the pinhole filter 4 and the collimator lens 5 before the wavefronts are used. The other lens is the field lens 7, which closes up the reconstructed image 9 so that the reconstructed image 9 is easily viewed by the observer 8.

A sequence of reconstructing an image is as follows:

(1) A hologram is generated from three-dimensional coordinate data by the personal computer 2 and is then displayed on the reflective LCD 1.

(2) The reflective LCD 1 is irradiated with the LED light 3A emitted from the LED 3 by using the beam splitter (half mirror) 6 to display a three-dimensional reconstructed image.

The experimental results on a hologram reproduced with the moving-image holographic reproducing device including the reflective LCD and the light-emitting diode according to the present invention will be described below.

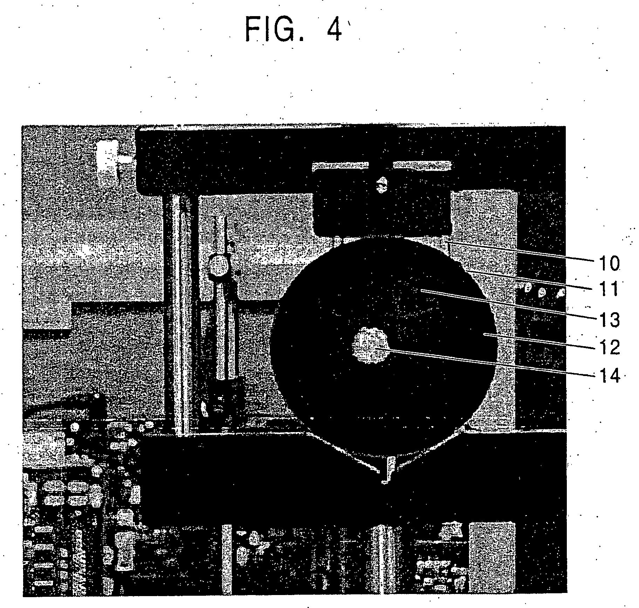

Fig. 4 is an example of a reconstructed cube with a moving-image holographic reproducing device according to the first embodiment of the present invention.

In the drawing, reference numeral 10 denotes a supporting portion of a reflective liquid crystal display (reflective LCD panel). Reference numeral 11 denotes a reflective LCD panel. Reference numeral 12 denotes a field lens. Reference numeral 13 denotes a cube (a reconstructed image viewed from the front). Reference numeral 14 denotes a direct beam of light from an LED (not shown).

In this embodiment, a slanting 2-cm-edge cube having 240 pixels was reconstructed in the air 1 m distant from the reflective LCD panel 11. Herein, the field lens 12 including the cube 13 was 5 cm in diameter. A bright spot 14 substantially at the center of the cube 13 was the direct light from the LED (not shown). The cube 13 (a reconstructed image viewed from the front) was reconstructed with diffracted light.

Viewing direct beams of laser light is dangerous for the human eye, whereas LED light is not harmful. To show the contrast, the direct light and the diffracted light are shown in the drawing. Of course, cutting off the direct light is technically easy. As shown in Fig. 4, the reconstructed image 13 can be clearly viewed under room lighting.

Thus, according to the present invention, a clear image was able to be reconstructed even though a laser for a light source was replaced with a light-emitting diode.

Additionally, eliminating the need for a laser can significantly reduce the size of the system.

Furthermore, a laser is not suitable for reference light when humans observe objects. The known display systems using LCDs indicate that, if a laser that should be used as a beam of light is used as divergent waves by interference fringes, even a high-power laser cannot provide sufficient intensity. Also, the laser light is coherent light that disadvantageously generates speckle noise.

As described above, a reflective LCD that can operate with LED-emitting incoherent light can provide the system with significant flexibility and cost reduction.

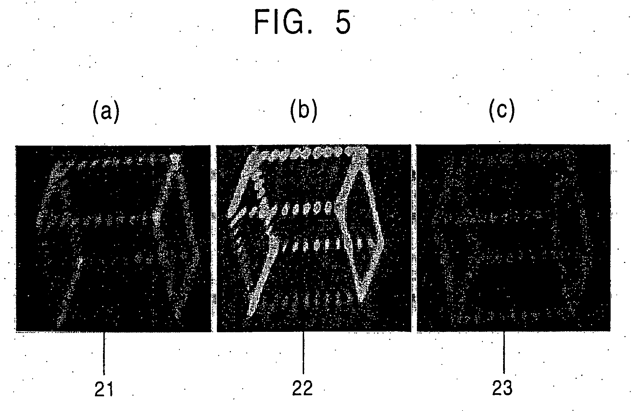

Fig. 5 is an example of reconstruction using LEDs for three primary colors of light, red (R), green (G), and blue (B), in a moving-image holographic reproducing device according to the first embodiment of the present invention.

In the drawing, a direct beam of light is optically eliminated.

In Figs. 5(a), 5(b), and 5(c), a red (R) image 21, a green (G) image 22, and a blue (B) image 23 of the cube are clearly reconstructed, respectively.

This result indicates that each of the red (R), green (G), and blue (B) images is clearly reconstructed, as shown in the drawing. This result also indicates that a color image is easily reconstructed by producing red (R), green (G), and blue (B) images and combining them. Such an image producing system including a combination of a reflective LCD and an LED is identical to current two-dimensional display devices, such as televisions, and, therefore, a moving three-dimensional image system (3-D television) can be achieved as an extension of current technologies.

A second embodiment of the present invention will be described next.

Holography is the only known technology that can record and faithfully reconstruct three-dimensional wavefronts. The moving three-dimensional image system using holography is considered to become an ultimate 3-D television. However, the practical application of holography is difficult. At the beginning of the 21st century, some predicted that real applications could be achieved in about 2020. The two main reasons are as follows:

(1) At present time, high-resolution display devices that can display interference fringes of the hologram are not available.
(2) A high-speed computer environment that can refresh a practical sized hologram at video rates (30 pictures per second) has not yet been realized.

Holography utilizes interference and diffraction of light. A wavefront of an object beam is overlapped with in-phase reference beam of light, such as a laser beam, and interference fringes are then recorded on a photographic plate (hologram). To reconstruct an image, only the reference beam of light is projected onto the hologram. The projected reference beam of light is diffracted by the interference fringes and the diffracted light faithfully reconstructs the wavefront of the object light.

Since the diffracted light is used to reconstruct the wavefront, the size of the viewing zone depends on the pixel pitch of a display device. Optical films, such as photosensitive silver salt films, have an image resolution between 0.1 and 1 $\mu$m, which corresponds to the pixel pitch, and a viewing zone size of greater than or equal to 40°. Therefore, the optical films provide sufficient capability of reconstructing a three-dimensional image. In fact, for still images, many superior holographic works have been created. However, for moving images, the hologram must be successively updated. The development of such a high-resolution display device that controls the large amount of data is difficult.

Only recently, high-resolution reflective liquid crystal display (LCD) panels having a pixel pitch of 10 $\mu$m have become commercially available. This pitch is yet an order of magnitude greater than that of an optical film. However, a holographic reconstruction experiment using one of these LCD panels exhibited a superior result such that an image of about 3 cm is clearly reconstructed and a light-emitting diode (LED) can be used as a reference light source instead of a laser (refer to the above-described first embodiment). The resolution of reflective LCDs has been growing year by year and is expected to grow even further in the future.

As the display device has a sufficiently high resolution, a problem of a computational processing system increases. The above-described two problems are dependent on each other; a high-resolution display device necessarily increases the amount of information.

Accordingly, the problem of moving-image holography finally results in the problem of information processing speed. For example, for a 10-by-10-cm effective area containing pixels having a pitch of 10 $\mu$m, this amounts to 100 million pixels. To drive the pixels at the video rate, computational power 1000 to 10000 times higher than that of a current supercomputer is required. For this problem, the inventor of the present invention has suggested that a dedicated computer system is considerably advantageous for the computational processing of holography (refer to the above-described References 3, 4, and 5).

In this embodiment, by using the above-described research result, a real-time moving-image holographic reproducing device (3-D television) is proposed in which a high-speed parallel distributed processing system dedicated for holography is combined with a high-resolution reflective LCD. That is, in the dedicated high-speed parallel distributed processing system (computer system) and a display system, a dedicated hardware arithmetic circuit executes the parallel distributed processing.

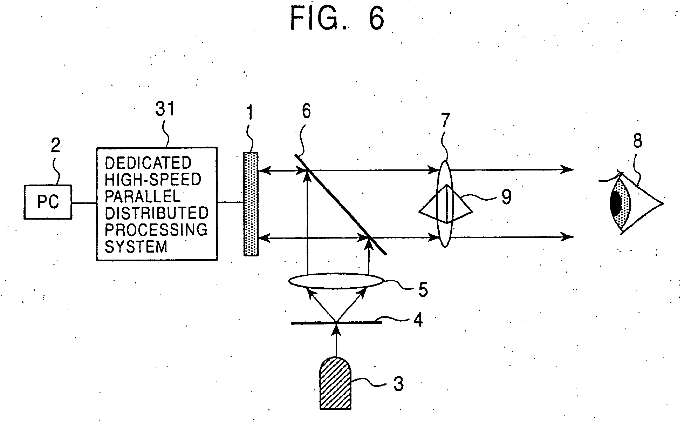

Fig. 6 is a system block diagram of a moving-image holographic reproducing device according to the second embodiment of the present invention. Elements identical to those illustrated and described in relation to the first embodiment are designated by like reference numerals and the descriptions are omitted.

In this embodiment, a dedicated high-speed parallel distributed processing system 31 is disposed between a PC (host computer) 2 and the high-resolution reflective liquid crystal display (LCD panel) 1.

The dedicated high-speed parallel distributed processing system will be described below.

Interference fringes of a hologram can be generated by computation of a computer. The hologram is referred to as a computer-generated hologram (CGH), which is used in this embodiment.

A computer system converts three-dimensional computer graphics to the CGHs at high speed and then successively displays them on a display system. The displayed holograms are reconstructed in the air at a position of the field lens as moving three-dimensional images by a reproducing optical system. This embodiment is characterized in that holography moving images are reconstructed by a high-speed parallel distributed processing of the computer system and the display system in real time. The reproducing optical system adopts the technology disclosed in the above-described first embodiment.

The display system of this embodiment will be described next.

At this time, a high-resolution, large-screen LCD for reconstruction of a holographic image of sufficient size is not available (at least not commercially available). The display system used in this embodiment is first described below.

For example, to reconstruct an image larger than 10 cm with an LCD having 10 μm pitch, a display area of about 10 cm by 10 cm is required. Herein, the display area of 10 cm by 10 cm is composed of a plurality of commercially available LCD panels having a 10 μm pitch, that is, 1000 by 1000 pixels, and an effective display area of 1 cm by 1 cm.

Since a holographic image is reconstructed by using diffraction of light, the size S of a reconstructed image is determined by diffraction angle θ and the reconstruction position, namely, the distance L between the LCD panel and the field lens. The size S is given by the following equation: $S=L\sin\theta$. The diffraction angle for a 10 μm pitch is about 3°. The reconstruction position can be freely determined by computation. For example, if L=1 m, then a reconstruction area having a size of 5 cm is achieved.

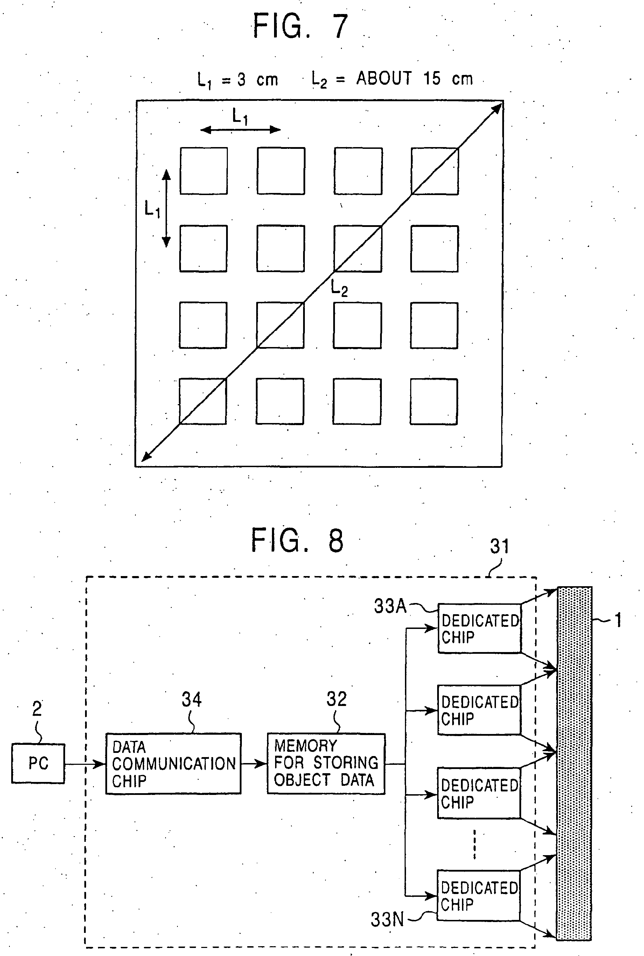

Accordingly, the LCD panels do not need to be closely arranged. An image can be reconstructed even with about sixteen LCD panels evenly arranged as shown in Fig. 7 so as to overlap each reconstruction area at the reconstruction position. This is due to the fact that holographic data has high redundancy. Of course, as the number of pixels increases, the quality of the image increases. In this embodiment, the display size is, in principal, scalable.

The high-speed parallel distributed processing system will be described below.

Interference fringes of a hologram can be given by the following equations:

$$I_\alpha = \sum_{j}^{M} \phi_{\alpha j} \qquad \cdots (1)$$

$$\phi_{\alpha j} = (A_j / R_{\alpha j}) \cos (kR_{\alpha j}) \qquad (2)$$

The computation is performed for discrete points, where $\alpha$ represents a point on a hologram, j represents a point that constitutes an object, Aj is the intensity of light of the object point, $R_{\alpha j}$ is a distance between the hologram point and the object point, and k is the wave number of a reference beam. M is the total number of the object points. To calculate a value $I_\alpha$ for a point on the hologram, Eq. (2) must be calculated M times.

Eq. (2) itself corresponds to about 30 arithmetic operations. When the pixel count of the hologram is N, the amount of computation for a plate is estimated to be 30MN. To generate 30 plates per second, a computational power of about $10^3$MN floating point operations per second (flops) is required. For example, to reconstruct a moving image of an object created with 100 thousand points ($M=10^5$) by using a 10-by-10-cm LCD having a pitch of 10 μm (total number of pixels: 100 million, i.e., $N=10^8$), a computational power of 10 peta (P: $10^{15}$) flops is required. Even for the 16-million-pixel display area of the example shown in Fig. 4, a computational power of Pflops is required. This is 1000 times faster than current supercomputers whose computational power has recently reached a speed of tera (T: $10^{12}$) flops.

In terms of speeding-up CGH, its algorithm has been improved; a method by using difference calculus or recurrence formula is proposed (refer to the above-described References 6 and 7). These methods achieve dozens of times speed-up compared to a direct computation of the above-described equation (2).

However, more significant speed-up is required for practical applications. Researchers in a laboratory of the inventor of the present invention have been researching the speed-up of the processing by hardware for ten years. The research results suggest that holographic information processing can be quite fast by using dedicated hardware. The reasons are the following three:

(1) The computation of the above-described equation (2) occupies almost all computation processes. Therefore, a dedicated circuit for equation (2) significantly improves the computational efficiency.

(2) The hardware facilitates parallel processing. Points of a hologram are independent from each other and, therefore, parallel and non-sequential processing is possible.

(3) The communication load is low. A major problem in a parallel processing system having a large amount of processing data is data communication between the systems. As will be described below, in this embodiment, a flow of data can be unidirectional and, therefore, a communication bottleneck does not occur.

The researchers in the laboratory of the inventor of the present invention have developed a hardware-oriented algorithm that can compute the above-described equation (2) without the use of multiplications, which increase the size of a circuit (refer to the above-described References 1 and 2). In the embodiment, this algorithm is used.

An actual circuit design using this algorithm reduced the scale of the circuit for the above-described equation (2) to 10 thousand gates. A dedicated chip was developed by connecting a plurality of the circuits in parallel. At present, the largest LSI has more than 10 million gates. Using this LSI allows 1000 circuits to be integrated onto the single chip. If this dedicated LSI operates at 1 GHz, the above-described equation (2) is repeated trillion ($10^{12}$) times per second. This processing speed is 30 times faster than that of a supercomputer.

Fifty of the dedicated LSIs operating in parallel allow a real-time reconstruction of moving three-dimensional images by the hologram shown in Fig. 7. If the number of pixels of the image is limited to about 10 thousand ($M=10^4$), five of the LSIs are sufficient. This is a practical estimation and indicates that the high-speed parallel distributed processing system (dedicated computer system) is extremely effective for the moving image holography.

Fig. 8 is a block diagram of a parallel distributed system including the dedicated chip.

In the drawing, reference numeral 31 denotes a dedicated high-speed parallel distributed processing system (dedicated computer). Reference numeral 32 denotes a memory for storing object data. Reference numerals 33A, ..., 33N denote dedicated chips and reference numeral 34 denotes a data communication chip.

An LCD panel 1 is divided into several areas and the dedicated chips 33A to 33N generate data for the respective areas. In general, a problem of parallel computation is a communication cost. In this embodiment, this problem does not occur. As indicated by arrows shown in Fig. 8, the flow of data is unidirectional. In addition, a host computer 2 only needs to transmit object point data to the memory 32 for storing object data in the dedicated high-speed parallel distributed processing system (dedicated computer) 31 via the data communication chip 34. That is, the amount of data communication has no relation to the size of the hologram.

In the dedicated high-speed parallel distributed processing system 31, the dedicated chips (dedicated LSIs) 33A, ..., 33N reference the object data at the same time, calculate interference fringes for the assigned points on the hologram, and then directly deliver the results to the display 1. The communications do not cross at all, and the data are distributedly processed. Accordingly, the communications do not constitute a bottleneck. The amount of data for each communication path is independent of the system size and remains constant at all times. For example, when an image having 100 thousand points is processed by the above-described chip that repeats the above-described equation (2) one trillion times per second, the required transfer speed is as low as about 10 MByte/sec ($10^{12}/10^5=10M$). This transfer speed is only determined by the number of pixels of the image and does not depend on the size of the hologram. That is, in this embodiment, although the numbers of the dedicated chips and the units of the LCD panel increase, the communication load does not increase. Consequently, a hologram surface of any size can be achieved.

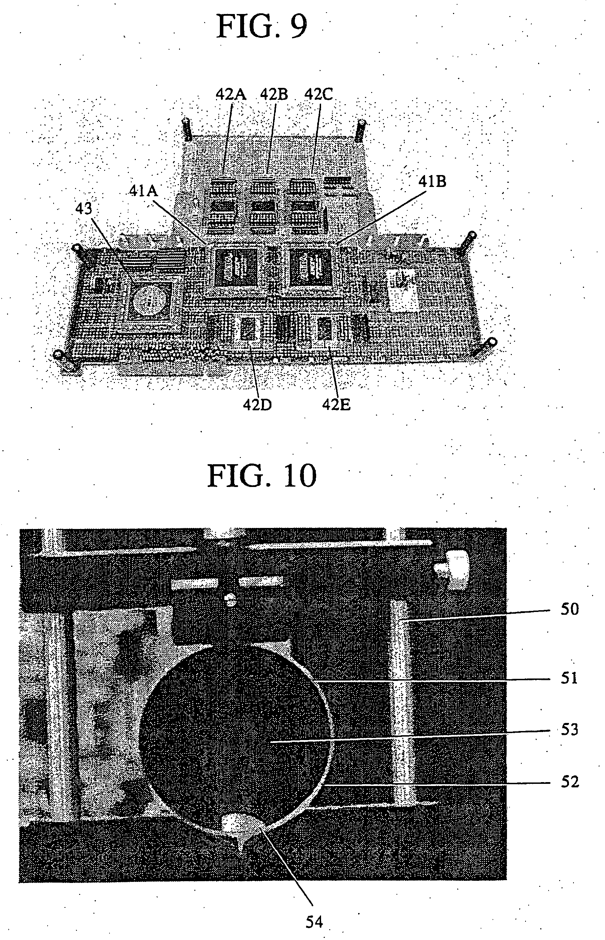

Fig. 9 is an external view of a specific dedicated high-speed parallel distributed processing system of the moving-image holographic reproducing device according to the second embodiment of the present invention. In the drawing, reference numerals 41A and 41B denote two dedicated holographic computing chips, reference numerals 42A to 42E denote five memories for storing object data, and reference numeral 43 denotes a data communication chip.

Fig. 10 is an example of a reconstructed dice by the moving-image holographic reproducing device according to the second embodiment of the present invention. In the drawing, reference numeral 50 denotes a supporting portion of a lens holder of a field lens, reference numeral 51 denotes the reflective LCD panel, reference numeral 52 denotes a field lens, and reference numeral 53 denotes a dice (a reconstructed image viewed from the front). Reference numeral 54 denotes a direct beam of light from an LED (not shown).

As shown in the examples, an image reconstructing experiment was conducted with a test device including the two dedicated chips 41A and 41B and two LCD panels, as a minimum configuration of the embodiment. The dedicated chips 41A and 41B were manufactured by using the EP20K300EQC240-1, a 300,000-gate programmable logic device (PLD), from Altera Corporation. Each chip included 30 circuits, each calculating the above-described equation (2). A board including the two chips was manufactured.

The LCD panel 51 was made from the DILA-SX070, a high-resolution reflective LCD, available from Victor Company of Japan, Limited. This panel had pixel pitches of 10.4 μm by 10.4 μm, 1400 by 1050 pixels, and an effective display area of 14.6 mm by 10.9 mm. Two of the panels were used. A moving image was reconstructed by this system using an optical reconstruction unit with an LED as a reference light source.

Fig. 10 shows an example of the experiment. The moving image 53 of a rotating 3-cm-edge dice made from 2600 pixels is presented.

The above-described configuration allows the following:

(1) A plurality of dedicated chips that execute a fast holographic processing algorithm in parallel is developed and used (refer to References 1 and 2).
(2) By using the above-described chips for parallel distributed processing, holographic calculation is performed at high speed.
(3) By the parallel distributed processing, a display area is scaled up.
(4) By the parallel distributed processing and unidirectional data communication, the data communication load is low.

These features allow a real-time moving three-dimensional image holographic system to be achieved.

A color moving-image holographic reproducing device, according to another embodiment of the present invention will be described below.

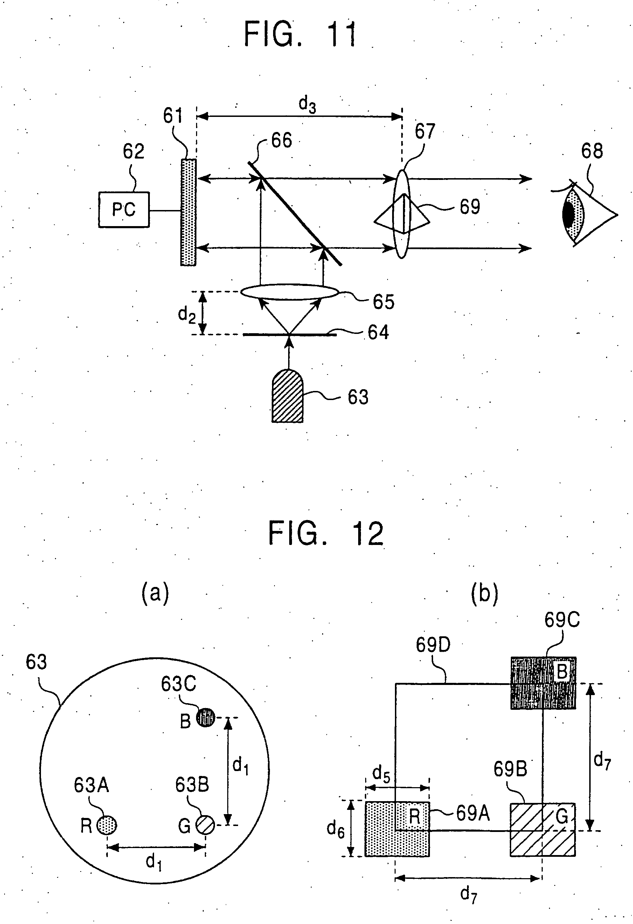

Fig. 11 is a block diagram of the color moving-image holographic reproducing device according to the embodiment of the present invention.

In the drawing, reference numeral 61 denotes a reflective liquid crystal display (reflective LCD). Reference numeral 62 denotes a computer (PC: personal computer). Reference numeral 63 denotes light-emitting diodes (LEDs), which are R, G, and B light sources. Reference numeral 64 denotes pinhole filters. Reference numeral 65 denotes a collimator lens. Reference numeral 66 denotes a beam splitter (half mirror). Reference numeral 67 denotes a field lens. Reference numerals 68 and 69 denote an observer and a reconstructed image, respectively.

In this system, a hologram generated by the computer (PC) 62 is displayed on the reflective LCD 61, which is irradiated with parallel light emitted from the LED 63 as reference light to reconstruct a moving three-dimensional image. A distance between the pinhole filter 64 and the collimator lens 65 is $d_2$ (300 mm) and the image 69 is reconstructed in the air at a position a distance $d_3$ (1000 mm) away from the surface of the LCD 1.

The main difference from the known technology described in (1) and (2) is that reference light sources, that is, a red (R) light source 63A, a green (G) light source 63B, and a blue (B) light source 63C are arranged in proximity to each other, as shown in Fig. 12(a). The R, G, and B light sources 63 emit light at the same time instead of emitting light in a time-multiplexing manner. The pinhole filter 64 is prepared for each of the R, G, and B light sources 63.

This arrangement shifts optical axes of the three colors from each other. The color moving-image holographic reproducing device according to the present invention makes active use of the shift.

Each beam of the R, G, and B light is reshaped into parallel light by the collimator lens 65. Since the R, G, and B light sources functioning as reference light sources are placed at different positions, each beam of parallel light is incident on the reflective LCD 61 at a different angle. Therefore, direct reflected light at the reconstruction position, which is a distance $d_3$ (1000 mm) from the reflective LCD 61, is shown in Fig. 12(b).

The size of rectangular regions 69A, 69B, and 69C shown in Fig. 12(b) is $d_5$ (14.6 mm) by $d_6$ (10.4 mm), which is the same size as that of the LCD panel used in the embodiment. A shift distance $d_7$ between the colors is given by [distance $d_1$ between the reference light sources (8 mm)]÷[distance $d_2$ between the pinhole filter 64 and the collimator lens 65 (300 mm)]×[distance $d_3$ between the LCD 1 and the reconstruction position (1000 mm)]=27 mm.

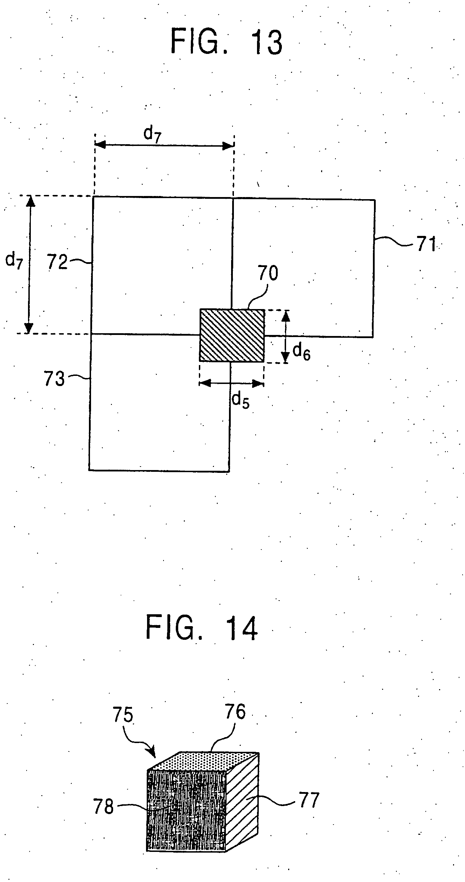

If, when a hologram is generated, a color graphic is divided into R, G, and B components and each component is drawn in the corresponding region shown in Fig. 13, the color components are combined at a hologram reconstruction area 69D shown in Fig. 12(b) and an original color graphic is reconstructed.

Since a rectangular region 70 of $d_5$ (14.6 mm) by $d_6$ (10.4 mm) at a center of Fig. 13 is an area overlapping with the direct light reflected from the LCD 61, the device does not draw the graphic in this region. Additionally, in the computer (PC) 62, a color is represented by a combination of the R, G, and B components, thus considerably facilitating the dividing operation of the color. In Fig. 13, reference numerals 71, 72, and 73 denote regions for the red component, green component, and blue component, respectively.

With reference to Fig. 14, as an example, holography reconstruction of a cube 75 having three colors, red 76, green 77, and blue 78, will be discussed.

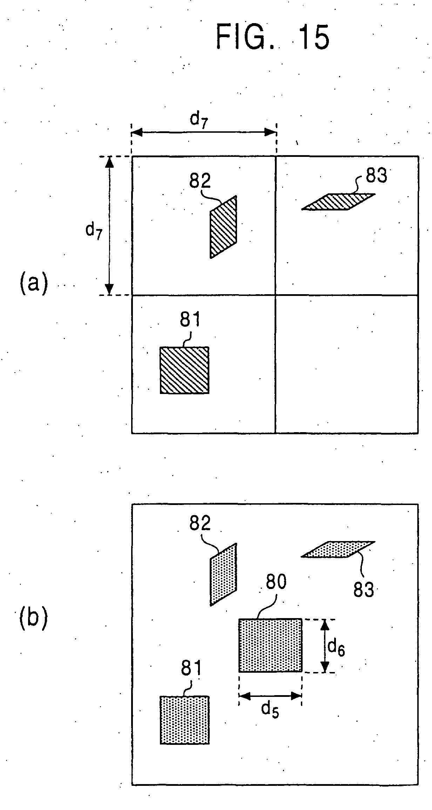

As shown in Fig. 13, the cube is redrawn in each color component region 71, 72, or 73, thus resulting in the example shown in Fig. 15(a). If this is reconstructed with a plain color (for example, red), the image is, of course, reconstructed as shown in Fig. 15(b). Herein, reference numeral 80 denotes the region for the direct light and reference numerals 81, 82, and 83 denote the regions for the divided color components.

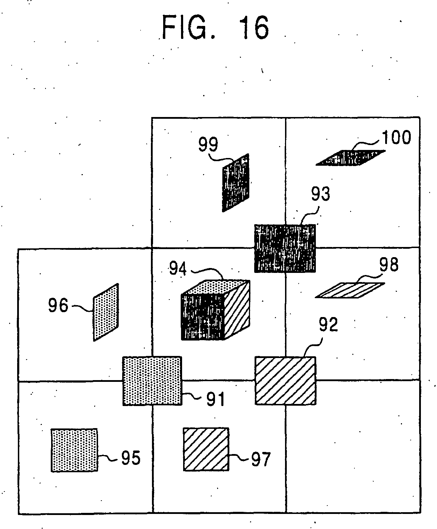

A reconstruction of the hologram shown in Fig. 15(a) with the RGB reference light sources shown in Fig. 12(a) will be discussed next. Since each RGB light source produces the reconstructed image shown in Fig. 15(b), the entire reconstructed image is shown in Fig. 16. That is, as can be seen, the original color cube 94 (corresponding to the cube 75) is reconstructed in an area surrounded by the direct RGB light (an R direct light region 91, a G direct light region 92, and a B direct light region 93). Reference numerals 95, 96, 97, 98, 99, and 100 denote the regions for the divided color components.

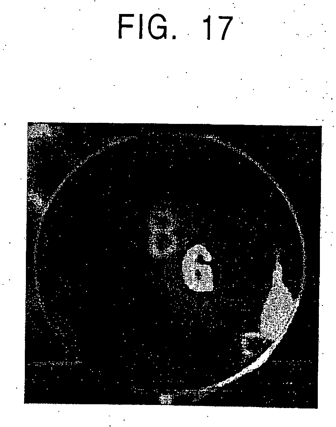

Fig. 17 shows an example of an actual reconstruction, in which images of characters R, G, and B were displayed in respective color regions and the hologram was then reconstructed. Although the blue direct light moved outside the field lens and, therefore, did not exist in the drawing, it was confirmed that a color image was actually reconstructed in the area surrounded by each beam of direct light.

In the above-described color moving-image holographic reproducing device, the size of a color reconstruction area is determined in accordance with the mutual ratios of the distance ($d_1$) between the LEDs, the distance ($d_2$) between the pinhole filter and the collimator lens, and the distance ($d_3$) between the reflective liquid crystal display and the field lens that produces a reconstructed image.

According to the present invention, the following features are provided, as described above.

First,

(1) A moving image having a size recognizable by the human eye can be reconstructed by using a light-emitting diode (LED) as a reference light source.
(2) A reflective LCD is used as a display device. Compared to a transmissive LCD used in known systems, a reflective LCD that has high use rate of light allows sufficiently bright reconstructed image to be displayed by using a LED-emitting weak light. Additionally, a reflective LCD structurally has higher resolution than a transmissive LCD.
(3) With an LED, color holography is easily achieved.

Second,

To process three-dimensional holographic images having a sufficient size in real time, computational power one thousand to ten thousand times higher than that of current supercomputers is required. Such a large amount of information can be processed at high speed in a highly parallel and distributed manner by dedicated hardware.

The present invention is not limited to the above-described embodiments. Various modifications and changes may be made without departing from the spirit and scope of the present invention and such modifications and changes are intended to be encompassed in the scope of the present invention.

As described above in detail, the present invention provides the following advantages:

[A]

(1) A high resolution image can be reconstructed in a simple way by using a reflective liquid crystal display and further a light-emitting diode as a reconstructing light source.
(2) A three-dimensional reconstructed image can be displayed by using LED light that is safe for the observer's eyes.
(3) A color image can be reconstructed by producing R, G, and B images with R, G, and B light sources and combining the images.
(4) A real-time moving-image holographic reproducing system can be realized. That is, a parallel distributed processing of holography calculations can be performed at high speed by using a plurality of dedicated chips that execute a fast holography computing algorithm in parallel. In addition, the parallel and distributed processing allows a display area to be scaled up with a minimum data transfer load by setting data communication to the parallel distributed processors to be unidirectional.

[B]

(1) A color hologram can be realized by using significantly simplified device that includes a single-plate hologram and does not require time-multiplexing.
(2) A real-time moving three-dimensional image holographic reproducing system can be realized.

Industrial Applicability

According to the present invention, the moving-image holographic reproducing device and the color moving-image holographic reproducing device are expected to be applied, in particular, to moving three-dimensional image systems.

**Claims**

**1.** A moving-image holographic reproducing device comprising:

(a) a computer for creating a hologram from three-dimensional coordinate data;
(b) a reflective liquid crystal display for displaying the hologram;
(c) a half mirror for projecting the displayed hologram;
(d) a light-emitting diode; and
(e) a reconstructed three-dimensional image being displayed by illuminating the half mirror with light emitted from the light-emitting diode.

2. The moving-image holographic reproducing device according to Claim 1, wherein three of the light-emitting diodes emit three primary colors of light, red (R), green (G), and blue (B) light, the RGB light sources produce images of the corresponding colors, and a color image is reconstructed by combining the images of the corresponding colors.

3. The moving-image holographic reproducing device according to Claim 1 or 2, further comprising a collimator lens disposed between the light-emitting diode and the half mirror.

4. The moving-image holographic reproducing device according to Claim 1 or 2, further comprising a field lens disposed between the half mirror and an observer.

5. The moving-image holographic reproducing device according to Claim 1, further comprising a dedicated high-speed parallel distributed processing system comprising a plurality of dedicated LSIs between the computer and the reflective liquid crystal display.

6. The moving-image holographic reproducing device according to Claim 5, wherein the dedicated high-speed parallel distributed processing system further comprises a shared memory for storing coordinates of an object and the plurality of dedicated LSIs configured in parallel.

7. A color moving-image holographic reproducing device comprising:

(a) a computer for creating a single-plate hologram from three-dimensional coordinate data;
(b) a reflective liquid crystal display for displaying the single-plate hologram;
(c) a half mirror for projecting the displayed single-plate hologram; and
(d) three LEDs for functioning as reference light sources, the LEDs respectively emitting primary colors of light, red (R), green (G), and blue (B), at the same time;

wherein optical axes of color light beams from the LEDs are shifted from each other, the light beams are projected to the half mirror, and a color holographic image is reconstructed with the single-plate hologram.

8. The color moving-image holographic reproducing device according to Claim 7, wherein the R, G, and B LEDs are arranged in proximity to each other.

9. The color moving-image holographic reproducing device according to Claim 8, wherein a first LED of the R, G, and B LEDs is disposed in the vicinity of a second LED in the X direction and a third LED is disposed in the vicinity of the second LED in the Y direction.

10. The color moving-image holographic reproducing device according to Claim 9, wherein each of the R, G, and B LEDs has a pinhole filter and emits light to a collimator lens to generate parallel light, and the half mirror is illuminated with the parallel light.

11. The color moving-image holographic reproducing device according to Claim 10, wherein the size of a color reconstruction area is determined in accordance with a distance $d_1$ between the LEDs, a distance $d_2$ between the pinhole filter and the collimator lens, and a distance $d_3$ between the reflective liquid crystal display and a field lens that produces a reconstructed image.

## FIG. 1

## FIG. 2

# FIG. 3

FIG. 4

— 10
— 11
— 13
— 12
— 14

## FIG. 5

(a)  (b)  (c)

21  22  23

# FIG. 6

# FIG. 7

$L_1 = 3$ cm $\quad L_2 =$ ABOUT 15 cm

# FIG. 8

# FIG. 9

# FIG. 10

# FIG. 11

d₃

# FIG. 12

(a)

(b)

# FIG. 13

# FIG. 14

# FIG. 15

(a)

(b)

# FIG. 16

FIG. 17

## INTERNATIONAL SEARCH REPORT

| International application No. |
|---|
| PCT/JP03/00246 |

**A. CLASSIFICATION OF SUBJECT MATTER**
Int.Cl⁷ G03H1/22

According to International Patent Classification (IPC) or to both national classification and IPC

**B. FIELDS SEARCHED**

Minimum documentation searched (classification system followed by classification symbols)
Int.Cl⁷ G03H1/22

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | Tomoyoshi ITO, Three Dimensional Reconstruction by Holography with Fine Minute Reflective liquid Crystal Display, HODIC Circular Holographic Display Artists and Engineers Club, 2001 August, Vol.21, No.3, pages 5 to 10 | 1–6<br>7–11 |
| Y<br>A | Tsuyoshi YAMAUCHI, Achromatic Reconstruction of Holographic Images Using LED Lights, HODIC Circular Holographic Display Artists and Engineers Club, 2001 November, Vol.21, No.4, pages 21 to 25 | 1–6<br>7–11 |

☐ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 April, 2003 (10.04.03) | 22 April, 2003 (22.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)